# EUROPÄISCHE PATENTSCHRIFT

(11) **EP 3 538 793 B1**
(45) Veröffentlichungstag und Bekanntmachung des Hinweises auf die Patenterteilung: **12.08.2020**
(21) Anmeldenummer: 17797301.3
(22) Anmeldetag: 03.11.2017
(51) Int. Cl.: F16H 57/08, F16H 1/46, F16H 55/17, F16H 57/02

(54) **HALTEPLATTEN ZUR FIXIERUNG VON PLANETENTRÄGER UND HOHLRAD**
RETAINER PLATES FOR FIXING PLANET CARRIER AND RING GEAR
PLAQUES DE RETENUE SERVANT À LA FIXATION D'UN PORTE-SATELLITES ET D'UNE COURONNE

(30) Priorität: 09.11.2016 DE 102016221961
(43) Veröffentlichungstag der Anmeldung: 18.09.2019
(73) Patentinhaber: ZF Friedrichshafen AG, 88046 Friedrichshafen (DE); ZF Wind Power Antwerpen NV, 3920 Lommel (BE)
(72) Erfinder: SPERLICH, Ralf, 58452 Witten (DE); MÜNCH, Jörg, 42399 Wuppertal (DE); STRASSER, Dirk, 58339 Breckerfeld (DE)
(74) Vertreter: ZF Friedrichshafen AG
(86) Internationale Anmeldenummer: PCT/EP2017/078216
(87) Internationale Veröffentlichungsnummer: WO 2018/087009

(56) Entgegenhaltungen:
- DE-A1-102011 118 832
- DE-A1-102011 118 832
- DE-A1-102014 208 793
- DE-A1-102014 208 793
- US-A- 3 986 413
- US-A- 3 986 413
- US-A- 4 417 485
- US-A- 4 417 485

## Beschreibung

Die Erfindung betrifft eine Anordnung nach dem Oberbegriff von Anspruch 1.

Durch die erfindungsgemäße Anordnung wird eine drehfeste Verbindung zwischen einem Planetenträger einer ersten Planetenstufe und einem Hohlrad einer zweiten Planetenstufe, die mit der ersten Planetenstufe eine Leistungsverzweigung bildet, hergestellt. Um zu verhindern, dass der Planetenträger und das Hohlrad sich axial gegeneinander verschieben, sind aus dem Stand der Technik Platten bekannt, die mit dem Hohlrad verschraubt werden und in eine Nut des Planetenträgers eingreifen.

Aus der DE 10 2011 118832 A1 ist eine Anordnung mit zwei Planetenstufen und einer Halteplatte bekannt.

Zu Problemen können hierbei Verformungen des Hohlrads führen. Aufgrund der axialen Fixierung in der Nut können die Platten derartigen Verformungen nur im begrenzten Umfang folgen. Durch die daraus resultierenden Belastungsspitzen kann es zu Beschädigungen der Platten und der Nut kommen.

Der Erfindung liegt die Aufgabe zugrunde, einen Planetenträger und ein Hohlrad unter Umgehung der den aus dem Stand der Technik bekannten Lösungen innewohnenden Nachteile miteinander zu fixieren. Insbesondere soll die Verschleiß- und Defektanfälligkeit einer derartigen Fixierung verringert und deren Haltbarkeit verbessert werden.

Diese Aufgabe wird gelöst durch eine Anordnung nach Anspruch 1.

Die Anordnung umfasst eine erste Planetenstufe, eine zweite Planetenstufe und mindestens eine Halteplatte.

Bei einer Planetenstufe handelt es sich um eine Getriebestufe mit einem Hohlrad, einem Planetenträger, einem oder mehreren Planetenrädern und einem Sonnenrad. Die Planetenräder sind drehbar in dem Planetenträger gelagert und kämmen jeweils mit dem Sonnenrad und/oder dem Hohlrad. Mindestens eins der Planetenräder kämmt mit dem Sonnenrad und mindestens ein weiteres der Planetenräder kämmt mit dem Hohlrad. mindestens zwei der drei Komponenten Hohlrad, Planetenträger und Sonnenrad sind drehbar gelagert. Die dritte Komponente ist drehfest angeordnet. Auf diese Weise stellt sich ein Getriebefreiheitsgrad von 1 ein, wenn die dritte Komponente ist drehfest angeordnet ist, oder von 2, wenn die dritte Komponente drehbar angeordnet ist.

Vorliegend sind der Planetenträger der ersten Planetenstufe und das Hohlrad der zweiten Planetenstufe um eine gemeinsame Drehachse drehbar gelagert und darüber hinaus drehfest miteinander verbunden. Der Planetenträger und das Hohlrad können somit zwar gemeinsam verdreht werden, nicht aber relativ zueinander.

Vorzugsweise sind der Planetenträger und das Hohlrad über eine Passverzahnung drehfest miteinander verbunden. Eine Passverzahnung, auch Steckverzahnung genannt, ist eine Vielfach-Mitnehmerverbindung, die aus zwei ineinander gesteckten Einzelverzahnungen besteht. Der Planetenträger und das Hohlrad bilden dabei jeweils eine dieser Einzelverzahnungen aus.

Durch die Passverzahnung entsteht zwar eine drehfeste Verbindung, allerdings sind die Einzelverzahnungen axial gegeneinander verschiebbar. Die Halteplatte dient dazu, den Planetenträger und das Hohlrad gegen eine solche Verschiebung zu sichern. Der Planetenträger bildet mindestens eine Nut aus, in welche die Halteplatte eingreift. Auf diese Weise kommt eine formschlüssige Fixierung zwischen der Halteplatte und dem Planetenträger zustande. Weiterhin ist die Halteplatte an dem Hohlrad angebracht bzw. an dem Hohlrad fixiert. Vorzugsweise ist die Halteplatte an dem Hohlrad, etwa durch Verschraubung, formschlüssig fixiert. Die Fixierung der Halteplatte an dem Hohlrad erfolgt derart, dass die Halteplatte bezüglich des Hohlrads unbeweglich ist, d.h. dass keinerlei Relativbewegungen zwischen der Halteplatte und dem Hohlrad stattfinden können.

Mindestens ein Teil der Nut und die gemeinsame Drehachse des Planetenträgers und des Hohlrads verlaufen windschief, d.h. antiparallel zueinander. Insbesondere verläuft eine Längsachse der Nut in dem genannten Teil windschief zu der Drehachse.

Die Längsachse zeichnet sich dadurch aus, dass Querschnitte der Nut entlang der Längsachse deckungsgleich sind. Zur Herstellung der Nut wird ein Werkzeug, etwa ein Fräser, entlang der Längsachse verfahren.

Vorzugsweise verlaufen der genannte Teil der Nut bzw. ihre Längsachse in dem Teil und die gemeinsame Drehachse des Planetenträgers und des Hohlrads orthogonal zueinander. Die Nut bzw. ihre Längsachse und die gemeinsame Drehachse des Planetenträgers und des Hohlrads besitzen keinen gemeinsamen Schnittpunkt.

Die in die Nut eingreifende Halteplatte kann zwar in Richtung der Längsachse der Nut verschoben werden, nicht aber orthogonal dazu. Durch die beschriebene Ausrichtung der Nut bzw. ihrer Längsachse relativ zu der gemeinsamen Drehachse des Planetenträgers und des Hohlrads erfolgt daher eine Begrenzung der Verschiebbarkeit der Nut in axialer Richtung. Infolgedessen ist auch die Verschiebbarkeit des Hohlrads relativ zu dem Planetenträger in axialer Richtung beschränkt.

Der Planetenträger weist zwei im Wesentlichen axial verlaufende Wangen und radial ausgerichtete Stege auf. Die Wangen sind in axialer Richtung relativ zueinander versetzt angeordnet und werden durch die Stege miteinander verbunden. Die Stege verlaufen entsprechend zwischen den Wangen. Insbesondere können die Wangen und die Stege einstückig miteinander verbunden sein.

Die Planentenräder sind gewöhnlich drehbar auf Planetenbolzen gelagert. Die Planetenbolzen sind wiederum in dem Planetenträger fixiert. Hierzu dienen sogenannte Bolzensitze. Dabei handelt es sich um Durchgangs- oder Sacklöcher, die paarweise miteinander fluchten, und in welche die Planetenbolzen eingeschoben werden.

Der Erfindung liegt die Erkenntnis zugrunde, dass die eingangs beschriebene Verformung des Hohlrads lokalen Maxima und Minima unterliegt. Es hat sich gezeigt, dass die Verformung zwischen einem Planetenbolzen bzw. einem Bolzensitz und einem Steg am geringsten ist. Erfindungsgemäß ist hier daher die Halteplatte angeordnet.

Im Einzelnen ist die Halteplatte mindestens teilweise auf einer ersten Seite einer ersten Ebene und auf einer ersten Seite einer zweiten Ebene angeordnet. Mit Ebene wird hier eine ebene, unbegrenzte Fläche im geometrischen Sinne verstanden. Insbesondere handelt es sich nicht um ein gegenständliches Objekt, sondern ein lediglich gedanklich vorhandenes Konstrukt.

Jede Ebene weist zwei Seiten auf, die durch die Ebene voneinander getrennt sind. So weisen die erste Ebene und die zweite Ebene neben der ersten Seite jeweils eine zweite Seite auf, die sich von der ersten Seite unterscheidet. Alle in dem Planetenträger fixierten Planetenbolzen sind jeweils auf der zweiten Seite der ersten Ebene und/oder auf der zweiten Seite der zweiten Ebene angeordnet. Entsprechend sind alle Stege des Planetenträgers auf der zweiten Seite der ersten Ebene und/oder der zweiten Seite der zweiten Ebene angeordnet. Dies bedeutet, dass keine der Planetenbolzen und keine der Stege mindestens teilweise auf der ersten Seite der ersten Ebene und auf der ersten Seite der zweiten Ebene liegt.

Die erste Ebene und die zweite Ebene schneiden sich. Ihre Schnittpunkte bilden eine Gerade. Diese ist mit der gemeinsamen Drehachse des Planetenträgers und des Hohlrads identisch.

Um sicherzustellen, dass die Halteplatte nur an der erfindungsgemäßen Position eingesetzt werden kann, weist der Planetenträger bevorzugt mindestens eine weitere Nut auf, die radial verläuft, d.h. deren Längsachse die gemeinsame Drehachse des Planetenträgers und des Hohlrads schneidet und orthogonal dazu ausgerichtet ist. Die Halteplatte weist eine Nase auf, die in die radiale Nut eingreift.

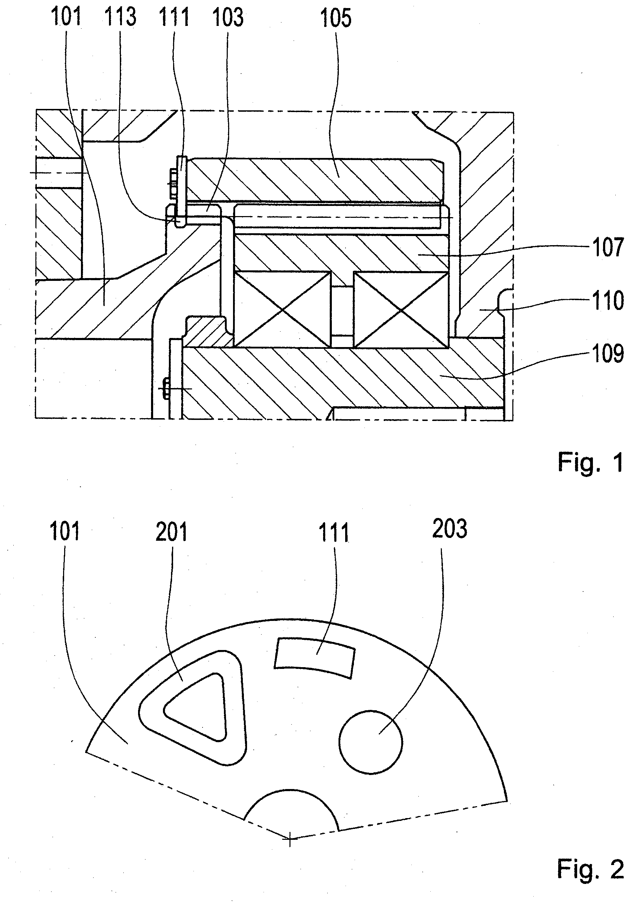

Ein bevorzugtes Ausführungsbeispiel der Erfindung ist in Fig. 1 dargestellt. Im Einzelnen zeigt:
- Fig. 1: einen ersten Ausschnitt eines Getriebes; und
- Fig.2: einen zweiten Ausschnitt des Getriebes.

Bei dem in Fig. 1 abschnittsweise dargestellten Getriebe handelt es sich um ein Getriebe einer Windkraftanlage. Abgebildet ist in Fig. 1 ein drehbar gelagerter Planetenträger 101 einer ersten Planetenstufe, der über eine Passverzahnung 103 drehfest mit einem ebenso drehbar gelagerten Hohlrad 105 einer zweiten Planetenstufe verbunden ist.

Die erste Planetenstufe und die zweite Planetenstufe realisieren eine Leistungsverzweigung.

Neben dem Hohlrad 105 umfasst die zweite Planetenstufe Planetenräder 107, Planetenbolzen 109 und einen Planetenträger 110. Die Planetenräder 107 sind jeweils drehbar auf einem der Planetenbolzen 109 gelagert und kämmen mit dem Hohlrad 105.

Halteplatten 111 dienen dazu, das Hohlrad 105 axial in dem Planetenträger 101 zu fixieren. Zu diesem Zweck sind die Halteplatten 111 mit dem Hohlrad 105 verschraubt und greifen in eine Nut 113 des Planetenträgers 101 ein. Die Nut 113 verläuft kreisförmig um eine gemeinsame Drehachse des Planetenträgers 101 und des Hohlrads 105. Die Halteplatten 111 sind jeweils zwischen einem in dem Planetenträger 101 fixierten Planetenbolzen 203 und einem in Fig. 2 dargestellten Steg 201 des Planetenträgers 113 angeordnet. Befinden sich die Halteplatten 111, wie in Fig. 2 dargestellt, mittig zwischen dem Steg und dem Planetenbolzen 203, sind durch Belastung auftretende Verformungen des Hohlrads 105 minimal.

### Bezuaszeichen

- 101: Planetenträger
- 103: Passverzahnung
- 105: Hohlrad
- 107: Planetenrad
- 109: Planetenbolzen
- 110: Planetenträger
- 111: Halteplatte
- 113: Nut
- 201: Steg
- 203: Planetenbolzen

## Patentansprüche

1. Anordnung mit einer ersten Planetenstufe, einer zweiten Planetenstufe und mindestens einer Halteplatte (111); wobei
die erste Planetenstufe einen Planetenträger (101) mit Stegen und mit Planetenbolzen (203), die in dem Planetenträger (101) fixiert sind, und die zweite Planetenstufe ein Hohlrad (105) aufweist; wobei
der Planetenträger (101) und das Hohlrad (105) drehfest miteinander verbunden und um eine gemeinsame Drehachse verdrehbar sind; wobei
die Halteplatte (111) an dem Hohlrad (105) angebracht ist und in eine Nut (113) des Planetenträgers (101) eingreift; **dadurch gekennzeichnet, dass** die Nut (113) und die Drehachse mindestens teilweise windschief zueinander verlaufen; und dass die Halteplatte (111) mindestens teilweise auf einer ersten Seite einer ersten Ebene und auf einer ersten Seite einer zweiten Ebene angeordnet ist; wobei
die erste Ebene und die zweite Ebene sich entlang der Drehachse schneiden; wobei alle in dem Planetenträger (101) fixierten Planetenbolzen (203) jeweils auf einer zweiten Seite der ersten Ebene und/oder auf einer zweiten Seite der zweiten Ebene liegen; und wobei
alle Stege des Planetenträgers (101) jeweils auf der zweiten Seite der ersten Ebene und/oder auf der zweiten Seite der zweiten Ebene liegen.

## Claims

1. Assembly having a first planetary stage, a second planetary stage and at least one retaining plate (111); wherein
the first planetary stage has a planet carrier (101) with webs and with planet bolts (203) which are fixed in the planet carrier (101), and the second planetary stage has a ring gear (105); wherein
the planet carrier (101) and the ring gear (105) are connected to one another for conjoint rotation and can be rotated about a common axis of rotation; wherein
the retaining plate (111) is mounted on the ring gear (105) and engages in a groove (113) of the planet carrier (101); **characterized in that**
the groove (113) and the axis of rotation extend at least partially skew to one another; and **in that**
the retaining plate (111) is arranged at least partially on a first side of a first plane and on a first side of a second plane; wherein
the first plane and the second plane intersect along the axis of rotation; wherein
all the planet bolts (203) fixed in the planet carrier (101) each lie on a second side of the first plane and/or on a second side of the second plane; and wherein
all the webs of the plant carrier (101) each lie on the second side of the first plane and/or on the second side of the second plane.

## Revendications

1. Agencement comprenant un premier étage planétaire, un deuxième étage planétaire et au moins une plaque de retenue (111) ;
le premier étage planétaire présentant un support planétaire (101) avec des porte-satellites et avec des axes de satellites (203) qui sont fixés dans le support planétaire (101), et le deuxième étage planétaire présentant une couronne dentée (105) ;
le support planétaire (101) et la couronne dentée (105) étant connectés de manière solidaire en rotation l'un avec l'autre et pouvant tourner autour d'un axe de rotation commun ;
la plaque de retenue (111) étant montée sur la couronne dentée (105) et s'engageant dans une rainure (113) du support planétaire (101) ; **caractérisé en ce que**
la rainure (113) et l'axe de rotation s'étendent au moins en partie obliquement l'un par rapport à l'autre ; et **en ce que**
la plaque de retenue (111) est disposée au moins en partie sur un premier côté d'un premier plan et sur un premier côté d'un deuxième plan ;
le premier plan et le deuxième plan s'intersectant le long de l'axe de rotation ;
tous les axes de satellites (203) fixés dans le support planétaire (101) étant à chaque fois situés sur un deuxième côté du premier plan et/ou sur un deuxième côté du deuxième plan; et
tous les porte-satellites du support planétaire (101) étant à chaque fois situés sur le deuxième côté du premier plan et/ou sur le deuxième côté du deuxième plan.
